# EUROPÄISCHE PATENTSCHRIFT

(11) **EP 3 573 850 B1**
(45) Veröffentlichungstag und Bekanntmachung des Hinweises auf die Patenterteilung: **03.02.2021**
(21) Anmeldenummer: 18702104.3
(22) Anmeldetag: 12.01.2018
(51) Int. Cl.: B60C 27/02, B60C 27/04, B60B 15/26

(54) **TRAKTIONSHILFE FÜR DEN REIFEN EINES KRAFTFAHRZEUGS**
TRACTION AID FOR THE TIRE OF A VEHICLE
AIDE DE TRACTION POUR PNEUMATIQUE D'UN VEHICULE

(30) Priorität: 24.01.2017 DE 102017000666
(43) Veröffentlichungstag der Anmeldung: 04.12.2019
(73) Patentinhaber: Herbst, Kurt, 91220 Schnaittach (DE); Trautner, Susann, 91207 Lauf (DE)
(72) Erfinder: Herbst, Kurt, 91220 Schnaittach (DE); Trautner, Susann, 91207 Lauf (DE)
(74) Vertreter: Louis Pöhlau Lohrentz
(86) Internationale Anmeldenummer: PCT/EP2018/050702
(87) Internationale Veröffentlichungsnummer: WO 2018/137940

(56) Entgegenhaltungen:
- DE-C- 733 101
- US-A- 2 767 761
- US-A- 2 910 105
- US-A1- 2010 276 046

## Beschreibung

### Hintergrund

Hier wird eine Anfahrhilfe für den Reifen eines Kraftfahrzeugs beschrieben. Details hierzu sind in den Ansprüchen definiert; auch die Beschreibung und die Zeichnung enthalten relevante Angaben zu der Anfahrhilfe und zur Funktionsweise sowie zu Varianten der Anfahrhilfe.

Ein Reifen, zum Beispiel für einen Personenkraftwagen, einen Lastkraftwagen, eine selbstfahrende Arbeitsmaschine oder ein land- bzw. forstwirtschaftliches Nutzfahrzeug, ist jener Teil des Rades auf dem es sich abrollt und Kontakt mit dem Untergrund hat auf dem das Kraftfahrzeug bewegt werden soll. Zur Bewegung des Kraftfahrzeuges, insbesondere zum Anfahren des Kraftfahrzeugs, ist es notwendig, das genügend Reibung zwischen dem Reifen und dem Untergrund besteht. Hierzu hat der Reifen in der Regel ein Profil, welches dazu dient die Reibung zwischen dem Reifen und dem Untergrund zu erhöhen.

Das Anfahren von Kraftfahrzeugen kann durch mangelnde Reibung zwischen den Reifen (insbesondere jenen, welche auf einer Antriebsachse montiert sind) und dem Untergrund erschwert sein. Dies ist beispielsweise der Fall beim Anfahren von Kraftfahrzeugen auf vereisten Flächen, sowie auf schneebedeckten oder schlammigen Untergrund. Die mangelnde Reibung zwischen den Kraftfahrzeugreifen und dem Untergrund kann zum Durchdrehen der Reifen führen. In der Praxis zeigt sich, dass hierdurch die Reibung zwischen den Reifen und dem Untergrund weiter verringert wird.

### Stand der Technik

Als Stand der Technik sind verschiedene Vorrichtungen bekannt, welche dazu bestimmt sind, durch die Montage an einem Reifen für ein Kraftfahrzeug dessen Reibungseigenschaften mit dem Untergrund zumindest zum Zweck des Anfahrens zu verbessern.

Die Gebrauchsmusterschrift DE 20 2011 002 383 U1 zeigt eine Anfahr- und Schneekettenmontagehilfe für Kraftfahrzeuge. Zwei oder mehr zueinander längsverschiebbare Greifarme umfassen hierbei einen Kraftfahrzeugreifen, wobei die Greifarme miteinander mittels einer Schnellspannvorrichtung verbunden sind. Die Greifarme können Ösen zum Anbringen von Schneeketten aufweisen. Eine Rückzugsfeder unterstützt die Befestigung der Greifarme am Kraftfahrzeugreifen.

Die Offenlegungsschrift DE 31 48 058 A1 zeigt eine Anfahrhilfe für Kraftfahrzeugräder, welche im Wesentlichen aus Bügeln besteht, die die Kraftfahrzeugräder übergreifen. Die Bügel werden hierbei einzeln an die Radscheiben angeschraubt.

Die Gebrauchsmusterschrift DE 20 2009 001 554 U1 zeigt eine Anfahrhilfe für Personenkraftwagen und Lastkraftwagen. Die Anfahrhilfe umfasst hierbei verschiebbare Arme, die über den Reifen greifen. Die Arme sind an einer Scherenraute befestigt, wobei diese eine Gewindestange umfasst. Eine Drehung der Gewindestange bewirkt eine Änderung der Innenwinkel der Scherenraute und somit eine Verschiebung der Arme.

Weitere Anfahrtshilfen mit radialen Armen und über den Reifen greifende Traktionselemente sind aus den Dokumenten DE733101C, US2910105A und US2010/276046 bekannt.

### Zu lösendes Problem

Eine einfach bedienbare und für unterschiedliche Reifendurchmesser verwendbare alternative Anfahrhilfe soll durch die Montage an den Reifen des Kraftfahrzeugs dessen Reibungseigenschaften auf insbesondere eisglatten, schneebedeckten oder schlammigen Untergrund, zumindest zum Zweck des Anfahrens verbessern.

### Hier vorgestellte Lösung

Diese Aufgabe löst eine Anfahrhilfe für den Reifen eines Kraftfahrzeuges, die einen Träger, ein Zentralelement und mindestens drei Bügel umfasst. Die Bügel umfassen hierbei jeweils ein Basiselement, ein Radialelement und ein zu dem Radialelement abgewinkeltes Mantelelement. Das Zentralelement ist um eine erste Achse rotierbar mit dem Träger verbunden. Jeder der mindestens drei Bügel ist um eine jeweils weitere Achse schwenkbar mit dem Träger verbunden. Das Zentralelement steht mit den Bügeln derart im Wirkeingriff, dass eine Rotation des Zentralelements um die erste Achse eine Schwenkung der Bügel um eine der jeweils weiteren Achsen bewirkt, sodass sich ein Abstand der jeweiligen Mantelelemente zur ersten Achse ändert.

Die Bügel sind dazu ausgebildet und angeordnet, einen Reifen mit ihren jeweiligen Radialelementen entlang einer Reifenseitenfläche zu umgreifen und mit ihren jeweiligen Mantelelementen den Reifen entlang der Reifenlauffläche zumindest teilweise zu umgreifen. Die Anfahrhilfe kann für den Transport zusammenklappbar sein.

Die Reibung des Reifens auf insbesondere eisglatten, schneebedeckten oder schlammigen Untergrund wird durch die Mantelelemente der Anfahrhilfe erhöht. Je mehr Bügel und damit Mantelelemente in einer Ausführungsform der Anfahrhilfe implementiert sind, desto größer ist der durch die Anfahrhilfe erzielte Effekt.

In einer Ausführungsform haben die weiteren Achsen jeweils den gleichen Abstand zu der ersten Achse. Somit liegen in dieser Ausführungsform aller weiteren Achsen auf einer Kreisbahn, die durch die erste Achse als Kreismittelpunkt und den jeweils gleichen Abstand als Radius definiert wird.

Die weiteren Achsen können jeweils den gleichen Abstand zu den jeweils nächstliegenden weiteren Achsen haben. Haben die weiteren Achsen zudem jeweils den gleichen Abstand zur ersten Achse, so definieren die weiteren Achsen die Eckpunkte eines regelmäßigen Polygons. Eine solche Anordnung der Achsen ist mechanisch vorteilhaft, da durch den symmetrischen Aufbau der Anfahrhilfe eine gleichmäßige Kraftübertragung vom Zentralelement an die mindestens drei Bügel realisiert werden kann, jedoch ist eine solche Anordnung der Achsen nicht in allen implementierbaren Varianten der Anfahrhilfe erforderlich.

Erfindungsgemäss ist das Zentralelement zumindest abschnittsweise ein Zahnrad, insbesondere ein Stirnrad oder ein Innenrad und/oder die Basiselemente der Bügel sind zumindest abschnittsweise Zahnräder, insbesondere Stirnräder, die rotierbar mit dem Träger verbunden sind und an denen jeweils eines der Radialelementen radial absteht. Die weiteren Achsen können sich in dieser Variante jeweils im Zentrum der Basiselemente befinden.

Eine Drehung des Zentralelements bewirkt eine Schwenkung der jeweiligen Radialelemente um die weiteren Achsen und somit die Veränderung des jeweiligen Abstandes der Mantelelemente zur ersten Achse. Die Anfahrhilfe kann auf diese Weise an einen Reifen montiert werden oder von einem Reifen gelöst werden. Zur Montage wird der Abstand der den Reifen umgreifenden Mantelelemente zur ersten Achse so lange verringert, bis sich ein fester Halt der Anfahrhilfe am Reifen ergibt. Zum Lösen der Anfahrhilfe vom Reifen wird der Abstand der den Reifen umgreifenden Mantelelemente zur ersten Achse vergrößert.

Die Geometrie der Zahnräder und das Über- bzw. Untersetzungsverhältnis zwischen dem Zentralelement und den einzelnen Basiselementen der Bügel kann hierbei frei gewählt werden. Unterschiedliche Über- bzw. Untersetzungsverhältnisse zwischen dem Zentralelement und den verschiedenen Basiselementen sind möglich. In der Praxis bietet es sich jedoch an, die Über- bzw. Untersetzungsverhältnisse zwischen dem Zentralelement und den Basiselementen gleichmäßig zu wählen. Denkbar sind weitere Varianten, in denen zum Beispiel nur Teile des Zentralelements oder der Basiselemente Zahnräder bzw. Zahnradabschnitte ausbilden. Ebenfalls denkbar ist die Verwendung von Zahnstangen, Kegelrädern, Schraubenrädern, Schnecken und Übertragungsmedien, insbesondere von Zahnriemen oder Ketten.

In einer anderen Variante sind die Basiselemente fest mit dem Träger verbunden. Die Radialelemente der Bügel sind hierbei um jeweils eine der weiteren Achsen schwenkbar mit dem Basiselement verbunden. Das Zentralelement steht unmittelbar im Wirkeingriff mit dem Radialelement. Die Radialelemente bilden in dieser Variante somit einen zweiarmigen Hebel aus, wobei die Schwenkpunkte der Hebel durch die weiteren Achsen definiert werden. In dieser Variante bewirkt eine Drehung des Zentralelements um die erste Achse die Übertragung einer Kraft auf den ihm zugewandten Hebelarm des Radialelements, sodass ein entgegengesetztes Drehmoment auf den ihm abgewandten Arm wirkt. Die Radialelemente schwenken somit um die weiteren Achsen, wodurch der Abstand der Mantelelemente zur ersten Achse verändert wird. Die Anfahrhilfe kann auf diese Weise an einen Reifen montiert werden oder von einem Reifen gelöst werden. Zur Montage wird der Abstand der den Reifen umgreifenden Mantelelemente zur ersten Achse so lange verringert, bis sich ein fester Halt der Anfahrhilfe am Reifen ergibt. Zum Lösen der Anfahrhilfe vom Reifen wird der Abstand der den Reifen umgreifenden Mantelelemente zur ersten Achse vergrößert.
Die Bügel der Anfahrhilfe können jeweils Verbindungsgelenke umfassen. Diese Verbindungsgelenke verbinden jeweils die Mantelelemente der Bügel mit den Radialelementen der Bügel in einem Winkel β von 80° bis 180°. Der Winkel β ist hierbei als der Winkel zwischen den Längenachsen des Mantelelements und des Radialelements definiert. In einer Ausführungsform können die Verbindungselemente mit einer Winkelsperre in einer wählbaren Winkelstellung fixiert werden.

Weiter können die Bügel der Anfahrhilfe jeweils eine Feder umfassen, welche ein Kraftmoment auf ein Mantelelement gerichtet hin zum Radialelement desselben Bügels ausübt. Die Feder kann jeweils in die Verbindungsgelenke integriert sein. Ist die Anfahrhilfe an einen Reifen montiert, kann die Feder die Mantelelemente an die Reifenoberfläche anpressen.

Die Mantelelemente können einen beispielsweise trapezförmigen, elliptischen, kreisrunden oder halbringförmigen Querschnitt aufweisen. Auch ein trapezförmiger mit elliptischer bzw. konkaver Aussparung versehener Querschnitt ist möglich. Ebenfalls möglich ist ein halbringförmiger Querschnitt der Mantelelemente. Der Begriff "halbringförmiger Querschnitt" bezeichnet hierbei einen hufeisenförmigen bzw. U-förmigen Querschnitt, sodass eine Seite des Mantelelements eine konkave und die andere Seite des Mantelelements eine konvexe Krümmung aufweist.

Weiter können die Mantelelemente auf der dem Reifen abgewandten Seite entlang ihrer Längenrichtung ein Profil haben, zum Beispiel eine Wellenprofil oder ein Zahnprofil. Auf der dem Reifen zugewandten Seite der Mantelelemente können Haltenasen ausgeformt sein, welche dazu dienen, das Fixieren des Mantelelements am Reifen zu verbessern. Die Mantelelemente können eine Mehrzahl von Haltenasen aufweisen.
In einer Variante der Anfahrhilfe hat das Zentralelement eine polygonförmige Aufnahme, welche sich für ein Zusammenwirken mit einem korrespondierend gestalteten polygonförmigen Werkzeugkopf eignet. In einer anderen Variante der Anfahrhilfe hat das Zentralelement einen polygonförmigen Werkzeugkopf, welcher sich für ein Zusammenwirken mit einem Werkzeug eignet, das eine korrespondierend gestalteten polygonförmige Aufnahme hat.

Somit kann das Zentralelement dazu ausgebildet und angeordnet sein mit einem Werkzeug, zum Beispiel durch einen Bediener, insbesondere mit einem Hebel, rotiert zu werden. Je nachdem ob das Zentralelement mit einer Aufnahme für einen Werkzeugkopf oder mit einem Werkzeugkopf ausgestattet ist, eignen sich hierfür Werkzeuge mit einem polygonförmigen Werkzeugkopf oder mit einer Aufnahme für einen polygonförmigen Werkzeugkopf. Ein Beispiel für ein solches Werkzeug ist eine Ratsche, entweder mit einem polygonförmigen Werkzeugkopf oder einer Aufnahme für einen polygonförmigen Werkzeugkopf.

Die Anfahrhilfe kann eine Sperrvorrichtung, insbesondere eine Sperrklinke, welche mit dem Träger verbunden ist, umfassen. Die Sperrvorrichtung erlaubt im geschlossenen Zustand die Rotation des Zentralelementes und/oder der Basiselemente in jeweils eine Rotationsrichtung und unterbindet eine Rotation in die jeweils andere Rotationsrichtung. Im geöffneten Zustand erlaubt die Sperrvorrichtung die Rotation des Zentralelements und/oder der Basiselemente in beide Rotationsrichtungen. In den Varianten der Anfahrhilfe, die ein Zahnrad als Zentralelement vorsehen, kann die Sperrvorrichtung eine Sperrklinke sein, die durch einen Bediener gelöst oder geschlossen werden kann.

Die Anfahrhilfe kann eine Kettenstruktur, insbesondere ein Kettengeflecht, umfassen. Die Kettenstruktur kann aus Kettengliedern und/oder Befestigungselementen bestehen. Die Kettenstruktur kann mit den Mantelelementen und/oder den Radialelementen der Bügel verbunden sein. Eine Kettenstruktur kann zum Beispiel eine als Stand der Technik bekannte Schneekette sein. Die Mantelelemente und/oder den Radialelemente der Bügel können Befestigungsvorrichtungen für eine Kettenstruktur aufweisen, zum Beispiel Montagehaken und/oder Ösen.

Vorteil einer Kettenstruktur ist die weitere Erhöhung der Reibung zwischen dem Reifen und insbesondere eisglatten, schneebedeckten oder schlammigen Untergrund.

Die Anfahrhilfe kann weiter eine Sicherheitsabdeckung umfassen, welche die mit dem Träger verbundenen Elemente der Anfahrhilfe vor Umwelteinflüssen, zum Beispiel dem Eindringen von Schmutz, schützt. Weiter kann eine solche Sicherheitsabdeckung die Bedienersicherheit der Anfahrhilfe erhöhen.

### Kurzbeschreibung der Figuren

Weitere Merkmale, Eigenschaften, Vorteile und mögliche Abwandlungen werden für einen Fachmann anhand der nachstehenden Beschreibung deutlich, in der auf die beigefügten Zeichnungen Bezug genommen ist. Dabei zeigen die Fig. schematisch mehrere Ausführungsbeispiele einer Anfahrhilfe für den Reifen eines Kraftfahrzeugs, ohne die Varianten der beschriebenen Vorrichtung auf diese zu beschränken.
- Fig. 1A: zeigt schematisch eine Variante der Anfahrhilfe mit rotierbar am Träger befestigten Stirnrädern.
- Fig. 1B: zeigt schematisch dieselbe Variante der Anfahrhilfe wie Fig. 1A und verdeutlicht die Auswirkungen einer Rotation des Zentralelements in einer ersten Richtung.
- Fig. 1C: zeigt schematisch dieselbe Variante der Anfahrhilfe wie Fig. 1A und verdeutlicht die Auswirkungen einer Rotation des Zentralelements in einer zweiten Richtung.
- Fig. 2A: zeigt schematisch eine Variante der Anfahrhilfe mit am Träger befestigten Basiselementen.
- Fig. 2B: zeigt schematisch dieselbe Variante der Anfahrhilfe wie Fig. 2A und verdeutlicht die Auswirkungen einer Rotation des Zentralelements.
- Fig. 3: zeigt schematisch die Änderung des Abstandes zwischen den Mantelelementen und der ersten Achse bei einer Rotation des Zentralelements.
- Fig. 4A - B: zeigen verschiedene Ausführungsformen der Anfahrhilfe mit Verbindungsgelenken und beispielhaft mögliche Querschnitte der Mantelelemente.
- Fig. 5A - E: zeigen schrittweise die Montage einer Variante der Anfahrhilfe (mit Stirnrädern und Verbindungsgelenken) an den Reifen eines Kraftfahrzeuges.
- Fig. 5F: zeigt schematisch eine Variante der Anfahrhilfe mit Sicherheitsabdeckung und stufenförmigen Radialelementen.
- Fig. 5G: zeigt schematisch eine Variante der Anfahrhilfe mit Sicherheitsabdeckung und gekrümmten Radialelementen.
- Fig. 6: zeigt beispielhaft mögliche Werkzeuge zur Rotation des Zentralelements.
- Fig. 7: zeigt beispielhaft die mögliche Verwendung von Ratschen als Werkzeug zur Rotation des Zentralelements.

### Detaillierte Beschreibung der Figuren

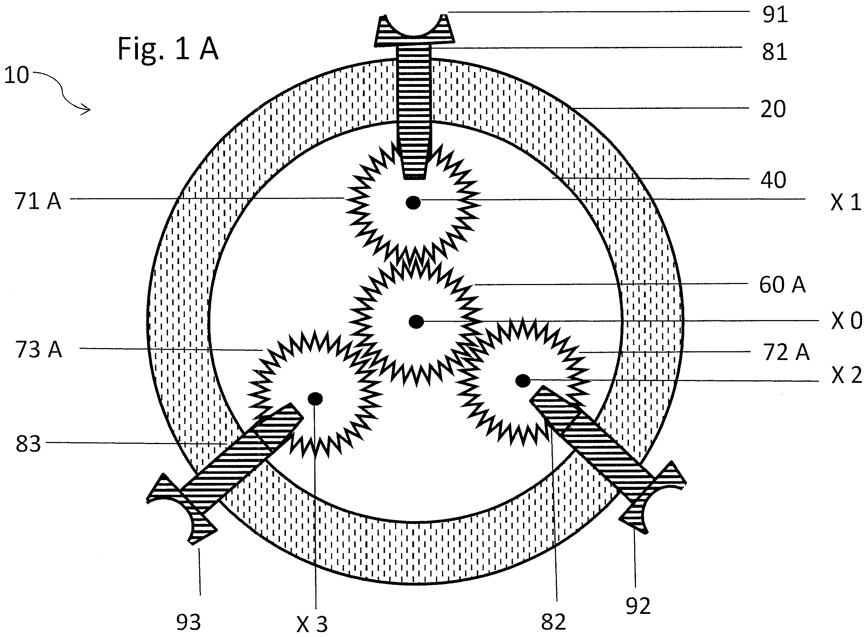

Fig. 1A zeigt eine Anfahrhilfe 10 für den Reifen 20 eines Kraftfahrzeugs. Auf einer Stahlplatte 40, sind ein Stirnrad 60A und drei Bügel rotierbar befestigt.

Der erste Bügel umfasst ein Stirnrad 71A, eine Radialstrebe 81 und eine Mantelstrebe 91. Das Stirnrad 71A ist fest mit einem ersten Ende der Radialstrebe 81 verbunden. Am entgegengesetzten zweiten Ende der Radialstrebe 81 ist diese in einem 90°-Winkel mit der Mantelstrebe 91 verbunden, sodass die Mantelstrebe 91 den Reifen 20 umgreift. Wie schematisch dargestellt hat die Mantelstrebe 91 in der gezeigten Ausführungsform einen trapezförmigen mit elliptischer Aussparung versehenen Querschnitt. Weiter ist das Stirnrad 71A um die Achse X1 rotierbar mit der Stahlplatte 40 verbunden.

Hierzu korrespondierend umfasst der zweite Bügel ein Stirnrad 72A, eine Radialstrebe 82 und eine Mantelstrebe 92. Der dritte Bügel umfasst ein Stirnrad 73A, eine Radialstrebe 83 und eine Mantelstrebe 93. Da die drei Bügel gleichartig gestaltet sind, korrespondiert der Aufbau des zweiten und dritten Bügels zum beschriebenen Aufbau des ersten Bügels, wobei das Stirnrad 72A um die Achse X2 rotierbar mit der Stahlplatte 40 verbunden ist und das Stirnrad 73A um die Achse X3 rotierbar mit der Stahlplatte 40 verbunden ist.

Das Stirnrad 60A ist um die erste Achse X0 rotierbar mit der Stahlplatte 40 verbunden und bildet zusammen mit den Stirnrädern 71A, 72A und 73A ein Getriebe, wobei die Stirnräder 71A, 72A und 73A jeweils mit dem Stirnrad 60A im Wirkeingriff stehen, jedoch nicht untereinander.

Im in Fig. 1A schematisch dargestellten Ausführungsbeispiel sind die Stirnräder 60A, 71A, 72A und 73A identisch gestaltet. Es ergibt sich somit jeweils ein Über- bzw. Untersetzungsverhältnis von 1:1. Weiter haben die Achsen X1, X2 und X3 den jeweils gleichen Abstand sowohl untereinander als auch zur Achse X0.

In anderen Ausführungsbeispielen mit einem Stirn- oder Innenrad (nicht gezeigt) als Zentralelement kann von der in Fig. 1A gezeigten geometrischen Anordnung der Zahnräder und den Übersetzungsverhältnissen abgewichen werden. Es lassen sich beliebige Größen- und Über-/Untersetzungsverhältnisse von Zahnrädern implementieren. Eine symmetrische räumliche Anordnung der Zahnräder ist vorteilhaft, aber nicht notwendig. Ebenso ist es vorteilhaft aber nicht notwendig, ein signifikantes Untersetzungsverhältnis zwischen dem Zentralelement und den Stirnrädern der Bügel zu implementieren und hierzu die Größen der verwendeten Zahnräder unterschiedlich zu wählen.

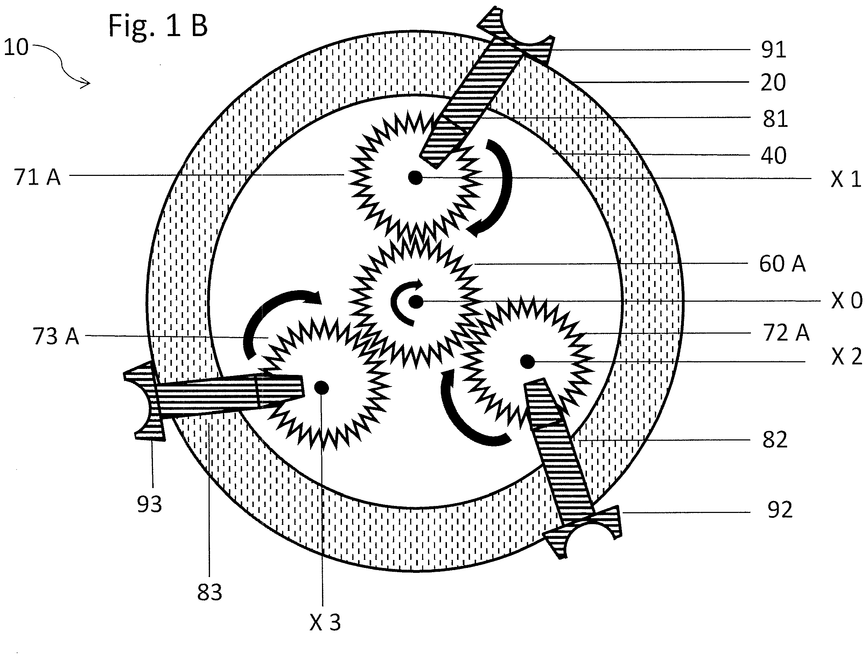

Fig. 1B zeigt schematisch die Auswirkungen einer Rotation des Stirnrads 60A einer ersten Rotationsrichtung. Rotiert das Stirnrad 60A um die Achse X0, so hat dies die Rotation der Stirnräder 71A, 72A und 73A im Gegensinn zur Folge. Die Rotation der Stirnräder 71A, 72A und 73A erfolgt jeweils um die Achsen X1, X2 und X3. Die jeweils mit den Stirnrädern 71A, 72A und 73A verbundenen Radialstreben 81, 82 und 83 schwenken somit um die Achsen X1, X2 und X3. Hierdurch wird eine Verringerung oder eine Vergrößerung des Abstandes der Mantelstreben 91, 92 und 93 zur Achse X0 bewirkt.

Somit wird, abhängig von der Rotationsrichtung des Stirnrades 60A, die Anfahrhilfe 10 am Reifen 20 durch die umgreifenden Mantelstreben 91, 92 und 93 fixiert oder gelöst. Die Mantelstreben 91, 92 und 93 dienen somit gleichzeitig zur Fixierung der Anfahrhilfe 10 am Reifen 20 und zur Erhöhung der Reibung des Reifens 20 auf dem Untergrund.

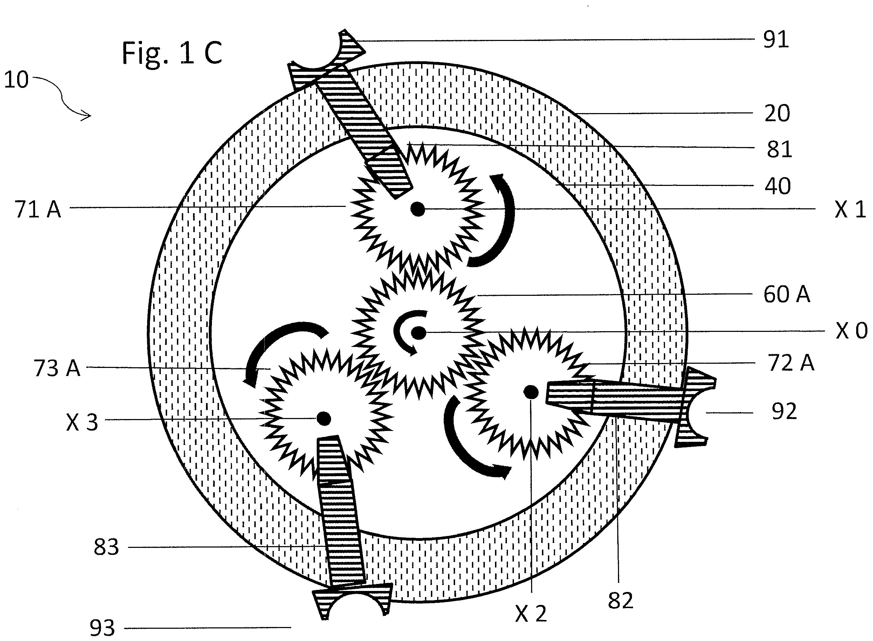

Fig. 1C zeigt schematisch die Auswirkungen einer Rotation des Stirnrades 60A in einer zweiten Rotationsrichtung. Die Auswirkungen der Rotation des Stirnrades in einer zweiten Rotationsrichtung korrespondieren mit jenen, die durch eine Rotation des Stirnrades 60A der ersten Rotationsrichtung bewirkt werden.

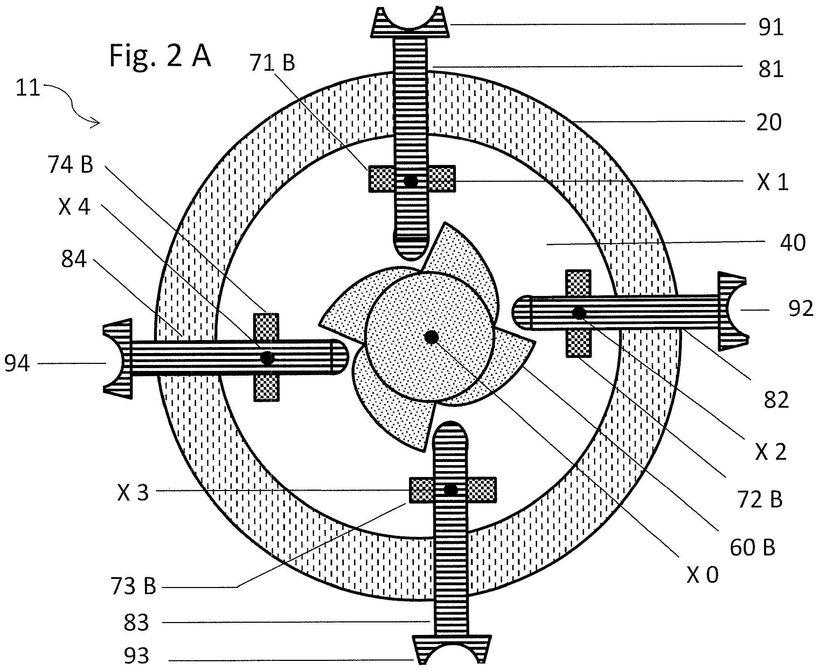

Fig. 2A zeigt eine alternative Ausführungsform einer Anfahrhilfe 11 für den Reifen 20 eines Kraftfahrzeuges. Auf einer Stahlplatte 40, ist ein Zentralelement mit asymmetrischen Zahnflanken 60B rotierbar befestigt. Vier Bügel sind zudem schwenkbar auf der Stahlplatte 40 befestigt.

Der erste Bügel umfasst ein Schwenklager 71B, eine Radialstrebe 81 und eine Mantelstrebe 91. Das Schwenklager 71B ist fest mit der Stahlplatte 40 verbunden. Die Radialstrebe 81 ist durch das Schwenklager 71B so gelagert, dass sie einen zweiarmigen um die Schwenkachse X1 gelagerten Hebel ausbildet, der mit einem ersten Ende mit dem Zentralelement 60B im Wirkeingriff steht. Am entgegengesetzten zweiten Ende der Radialstrebe 81 ist diese in einem 90°-Winkel mit der Mantelstrebe 91 verbunden, sodass die Mantelstrebe 91 den Reifen 20 umgreift. Wie schematisch dargestellt hat die Mantelstrebe 91 in der gezeigten Ausführungsform einen trapezförmigen mit elliptischer Aussparung versehenen Querschnitt.

Hierzu korrespondierend umfasst der zweite Bügel ein Schwenklager 72A, eine Radialstrebe 82 und eine Mantelstrebe 92. Der dritte Bügel umfasst ein Schwenklager 73B, eine Radialstrebe 83 und eine Mantelstrebe 93. Der vierte Bügel umfasst ein Schwenklager 74B, eine Radialstrebe 84 und eine Mantelstrebe 94. Da die vier Bügel gleichartig gestaltet sind, korrespondiert der Aufbau des zweiten, dritten und vierten Bügels zum beschriebenen Aufbau des ersten Bügels, wobei den Schwenklagern 72B, 73B und 74B jeweils die Schwenkachsen X2, X3 und X4 zugeordnet sind. Die Schwenkachsen X1, X2, X3 und X4 haben den jeweils gleichen Abstand sowohl untereinander als auch zur ersten Achse X0.

Das Zentralelement 60B ist um die erste Achse X0 rotierbar mit der Stahlplatte 40 verbunden und steht mit den Radialstreben 81, 82, 83 und 84 im Wirkeingriff.

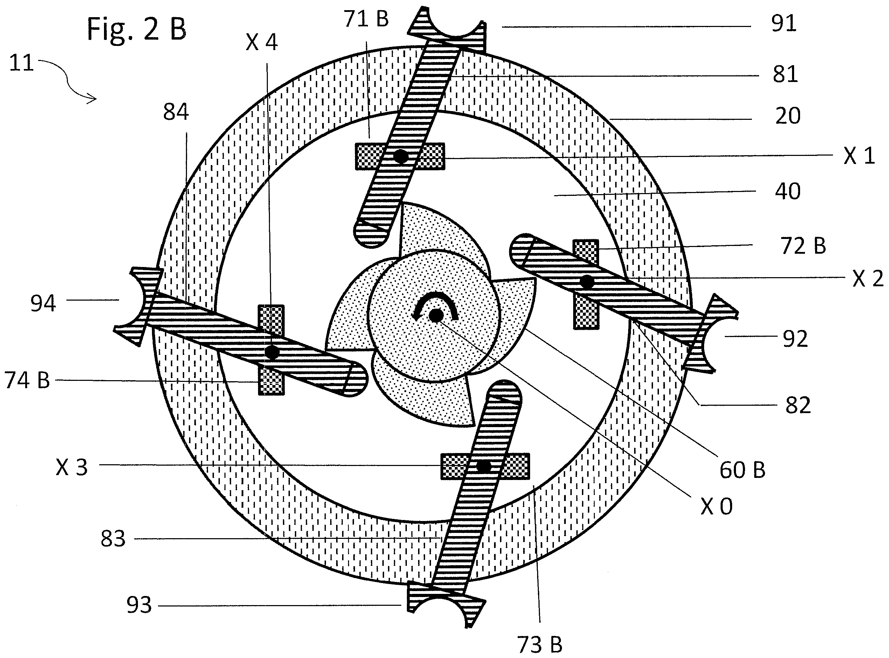

Fig. 2B zeigt schematisch die Auswirkungen einer Rotation des Zentralelements 60B. Rotiert das Zentralelement 60B um die Achse X0, so hat dies die Schwenkung der Radialstreben 81, 82, 83 und 84 zur Folge. Die Schwenkung der Radialstreben 81, 82, 83 und 84 erfolgt jeweils um die Achsen X1, X2, X3 und X4. Die jeweils mit den Radialstreben 81, 82, 83 und 84 verbundenen Mantelstreben 91, 92, 93 und 94 schwenken somit auf einer Kreisbahn um die Achsen X1, X2, X3 und X4. Hierdurch wird eine Verringerung oder eine Vergrößerung des Abstandes der Mantelstreben 91, 92, 93, 94 von der Achse X0 bewirkt.

Somit wird, abhängig von der Rotationsrichtung des Zentralelements 60B, die Anfahrhilfe 10 am Reifen 20 durch die umgreifenden Mantelstreben 91, 92, 93 und 94 fixiert oder gelöst. Die Mantelstreben 91, 92, 93 und 94 dienen somit gleichzeitig zur Fixierung der Anfahrhilfe 11 am Reifen 20 und zur Erhöhung der Reibung des Reifens 20 auf dem Untergrund.

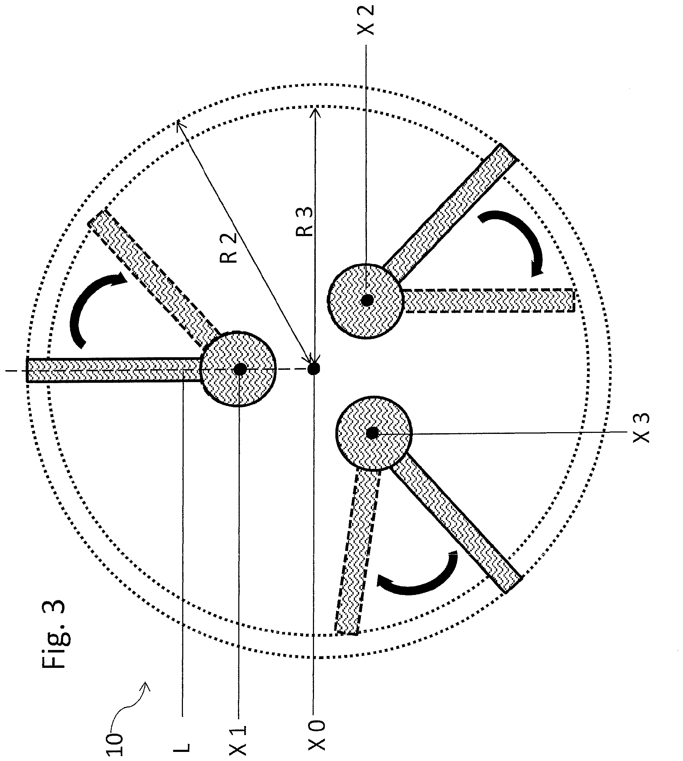

Fig. 3 zeigt eine stark vereinfachte Darstellung der in Fig. 1 gezeigten Anfahrhilfe. Fig. 3 verdeutlicht die Veränderung des Abstandes der Radialstreben bzw. der an den Enden der Radialstreben befestigten Mantelstreben zur ersten Achse X0 durch die Schwenkung der Bügel um die Achsen X1, X2 und X3. Die maximale Distanz R2 zwischen der Achse X0 und dem Ende einer Radialstrebe bzw. einer Mantelstrebe wird erreicht, wenn die Längenachse L der Radialstrebe die erste Achse X0 schneidet. Eine Schwenkung der Bügel führt zu einer Bewegung der Enden der Radialstreben bzw. der Mantelstreben entlang einer Kreisbahn. Es resultiert eine gegenüber R2 verringerten Distanz R3 zwischen der ersten Achse X0 und den Enden der Radialstreben bzw. der Mantelstreben.

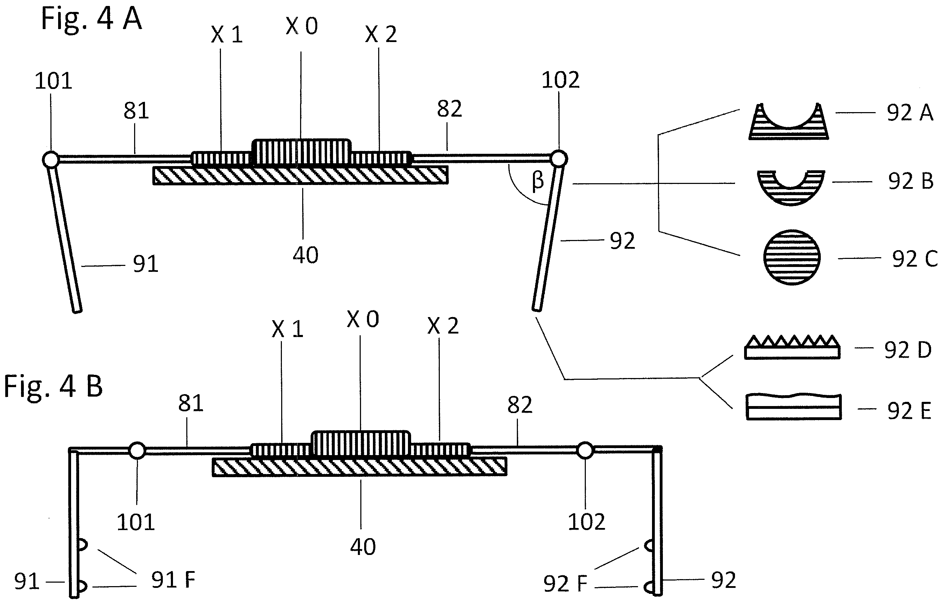

Fig. 4A und Fig. 4B zeigen schematisch Ausführungsbeispiele der Anfahrhilfe 10 aus einer gegenüber den Fig. 1 A/B und Fig. 2 A/B um 90° gedrehten Perspektive. Aus Gründen der besseren Darstellbarkeit als zweidimensionale Zeichnung sind jedoch schematisch nur zwei der vorhandenen mindestens drei Bügel gezeichnet. Eine mit dem Träger verbundene Sicherheitsabdeckung S, welche die mit dem Träger verbundenen Elemente der Anfahrhilfe vor Umwelteinflüssen schützt und die Bedienersicherheit erhöht, ist aus Gründen der besseren Darstellbarkeit als zweidimensionale Zeichnung ebenfalls nicht gezeichnet.

Die Verbindungsgelenke 101, 102 erlauben eine Positionierung der Mantelstreben 91, 92 in einem Winkel β von 80° bis 180° relativ zu den Radialstreben 81, 82. Der Winkel β ist hierbei jeweils als der Winkel zwischen den Längenachsen den Mantelstreben 91, 92 und der Radialstreben 81, 82 definiert. Die Verbindungsgelenke 101, 102 können mit einer Sperre (nicht gezeigt) in einer Winkelstellung fixiert werden. Eine Montage der Anfahrhilfe an den Reifen eines Kraftfahrzeuges wird hierdurch erleichtert.

Die Verbindungsgelenke 101, 102 enthalten je eine Feder (nicht gezeigt), welche ein Kraftmoment auf eine Mantelstrebe 91, 92 gerichtet hin zur Radialstrebe 81, 82 desselben Bügels ausübt. Ist die Anfahrhilfe an einen Reifen montiert, presst die Feder die Mantelstreben 91, 92 an die Reifenoberfläche an.

Beispielhaft zeigt Fig. 4A zudem mögliche Querschnitte 92A, 92B und 92C der Mantelstreben, welche geeignet sind, die Reibung zwischen einem mit der Anfahrhilfe ausgestatteten Reifen und einem insbesondere eisglatten, schneebedeckten oder schlammigen Untergrund zu erhöhen. Beispielhaft dargestellt werden ein trapezförmiger mit elliptischer Aussparung versehener Querschnitt 92A, ein halbringförmiger Querschnitt 92B und ein kreisrunder Querschnitt 92C.

Weiter zeigt Fig. 4A zwei mögliche Längsschintte 92D und 92E der Mantelstreben, welche geeignet sind, die Reibung zwischen einem mit der Anfahrhilfe ausgestatteten Reifen und einem insbesondere eisglatten, schneebedeckten oder schlammigen Untergrund zu erhöhen. Beispielhaft dargestellt werden eine einseitige Zahnung 92D und ein einseitig wellenförmiger Längsschintt 92 E.

Eine Kombination der dargestellten jeweiligen Quer- und Längsschnitte ist möglich. Zum Beispiel kann einen Mantelstrebe mit halbringförmigen Querschnitt implementiert werden, deren dem Reifen abgewandten Halbringenden jeweils eine Zahnung in Längsrichtung haben.

Fig. 4B zeigt schematisch die Haltenasen 91F und 92F. Die Haltenasen sind auf der dem Reifen zugewandten Seite der Mantelstreben positioniere Ausformungen der Mantelstreben, welche dazu dienen, die Fixierung der Anfahrhilfe am Reifen zu verbessern.

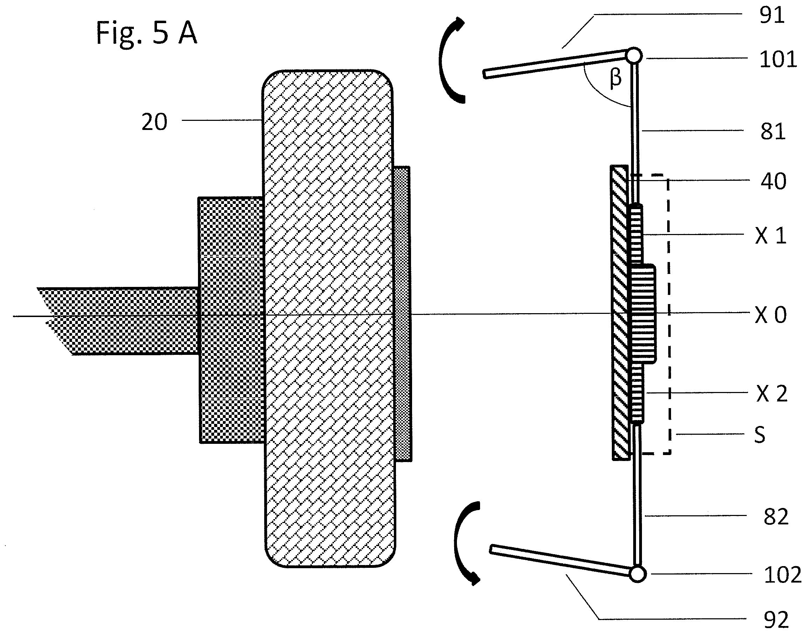

Die Fig. 5A - 5E zeigen beispielhaft die Montage der Anfahrhilfe 10 mit Verbindungsgelenken 101, 102 am Reifen 20 aus einer gegenüber den Fig. 1 A/B und Fig. 2 A/B um 90° gedrehten Perspektive. Aus Gründen der besseren Darstellbarkeit als zweidimensionale Zeichnung sind jedoch schematisch nur zwei der vorhandenen mindestens drei Bügel gezeichnet. Eine mit dem Träger verbundene Sicherheitsabdeckung S, welche die mit dem Träger verbunden Elemente der Anfahrhilfe vor Umwelteinflüssen schützt und die Bedienersicherheit erhöht, ist lediglich schematisch gezeigt, damit die unter dieser Sicherheitsabdeckung S befindlichen Bestandteile in den Fig. 5A - 5E sichtbar sind.

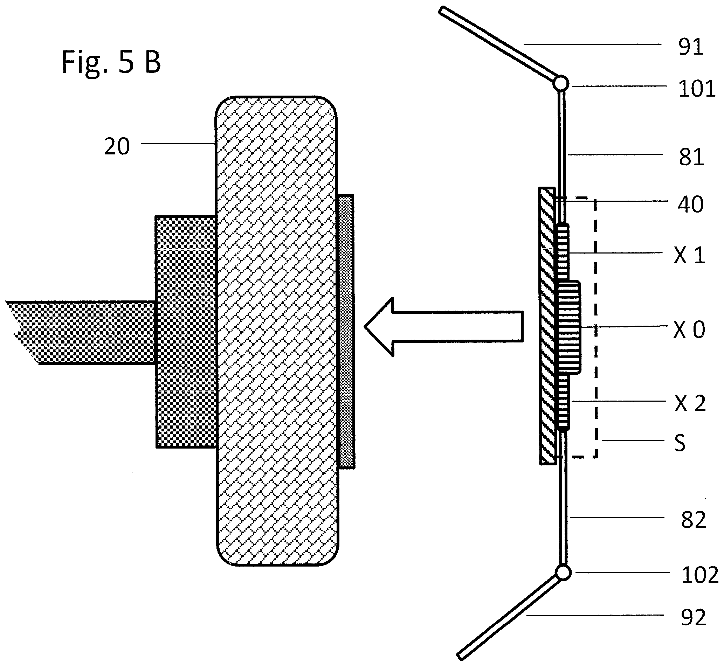

Die Anfahrhilfe 10 wird zunächst an die Außenseite eines an einem Kraftfahrzeug montierten Reifens 20 verbracht, sodass die Stahlplatte 40 an der Felge des Reifens 20 anliegt und die Mantelstreben 91, 92 den Reifen 20 umgreifen. Die Mantelstreben 91, 92 sind mittels der Verbindungsgelenke 101, 102 mit den Radialstreben 81, 82 verbunden. Der zwischen den Längenachsen der jeweiligen Streben definierte Winkel β wird zunächst auf über 90° erweitert, um die Montage zu erleichtern. (Fig. 5 A/B)

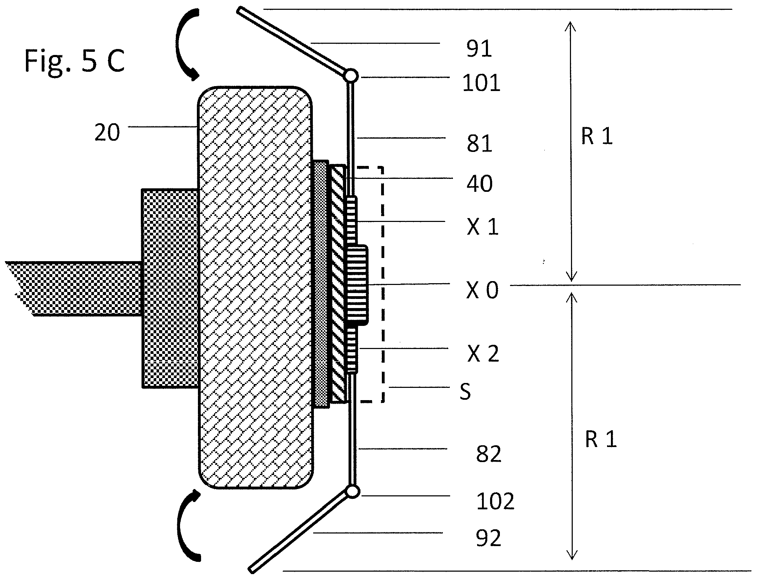

Nachdem die Anfahrhilfe 10 an den Reifen 20 angelegt wurde, werden die Mantelstreben in einem Winkel β von 90° fixiert. (Fig. 5C) Um die Fixierung der Anfahrhilfe 10 am Reifen 20 zu verbessen, können die Mantelstreben auch in einem Winkel β von kleiner als 90°, zum Beispiel 85°, fixiert werden.

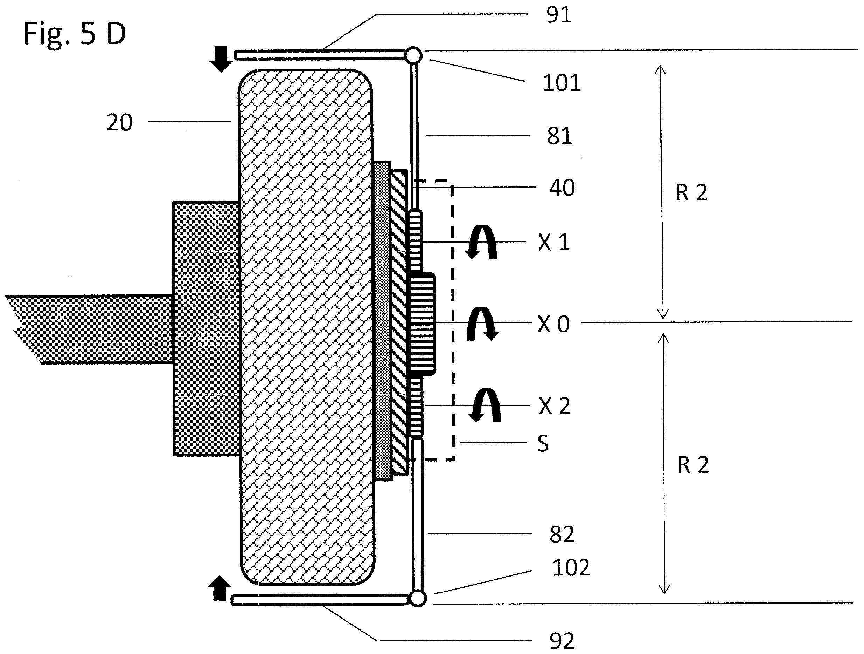

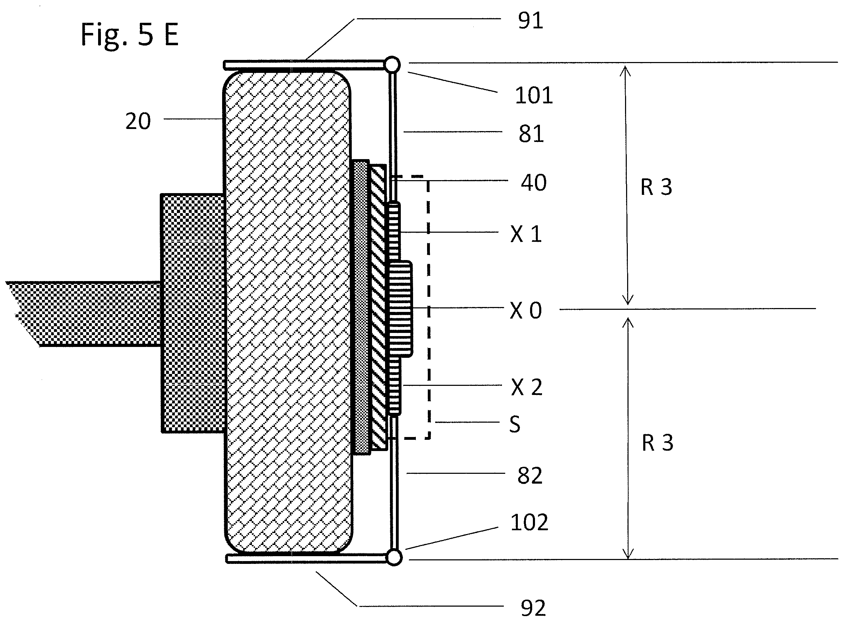

Durch die anschließende Rotation des Zentralelements um die Achse X0 wird eine Rotation der Bügel im Gegensinn des Stirnrads 60A bewirkt. Wie in Fig. 3 schematisch dargestellt, führt dies zu einer Verringerung des Abstandes der Mantelstreben 91, 92 zur Achse X0. Hierdurch werden die Mantelstreben gegen die Oberfläche des Reifens 20 gepresst. Die Distanz R3 zwischen den Mantelstreben 91, 92 und der Achse X0 ist gleich oder kleiner dem Radius des Reifens 20. Die Anfahrhilfe 10 wird somit durch das Anpressen der Mantelstreben 91, 92 am Reifen 20 fixiert. (Fig. 5D/E)

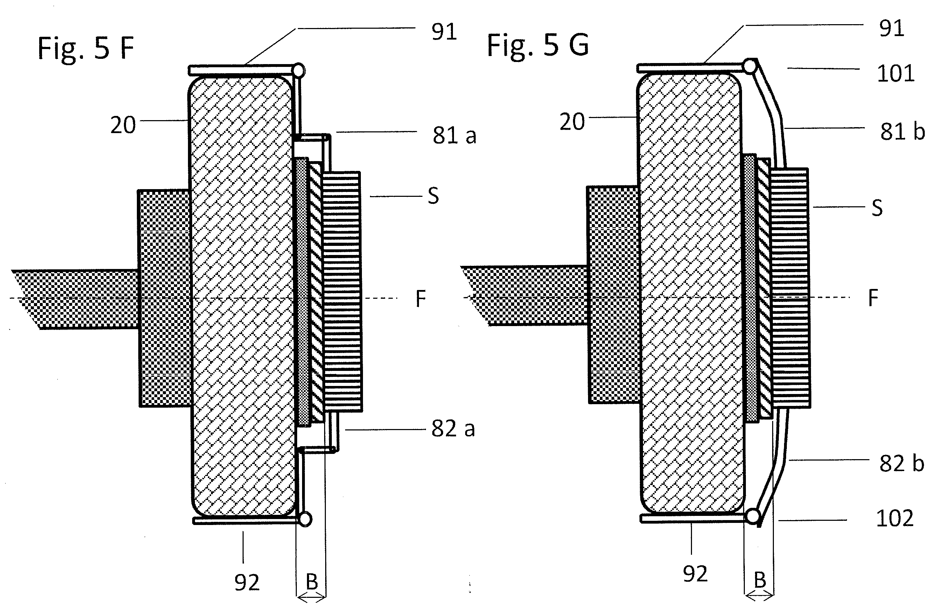

Fig. 5F zeigt eine Ausführungsform der Anfahrhilfe 10 mit abgestuften Radialstreben 81a, 82a. Die gezeigten Radialstreben 81a, 82a haben jeweils eine Abstufung entlang ihrer Längenrichtung, wobei die Abstufungen in Richtung der Stahlplatte 40 beziehungsweise des Reifens 20 weisen. Die Abstufungen werden in der dargestellten Ausführungsform der Anfahrhilfe 10 jeweils durch zwei 90°-Winkel definiert, sodass jeweils ein erster und ein dritter Abschnitt der gezeigten Radialstreben 81a, 82a parallel zur Reifenseitenfläche des Reifens 20 verlaufen. An die dritten Abschnitte der Radialstreben 81a, 82a schließen sich mittels der Verbindungsgelenke jeweils die Mantelstreben 91, 92 an. Ein jeweils zwischen dem ersten und dem dritten Abschnitt der Radialstreben 81a, 82a positionierter zweiter Abschnitt verläuft jeweils orthogonal zum ersten und dritten Abschnitt der jeweiligen Radialstrebe 81a, 82a und parallel zu einer Fahrzeugachsenrichtung F. In anderen Ausführungsformen sind von 90° abweichende Winkel zur Ausformung der Abstufung implementierbar.

Durch jenen Teil der zum Reifen 20 gehörigen Felge, welcher über die Seitenfläche des Reifens 20 in der Fahrzeugachsenrichtung F hinausragt, und durch die Dicke der Stahlplatte 40 wird eine Beabstandung B definiert.

Durch die Abstufung der gezeigten Radialstreben 81a, 82a wird erreicht, dass der jeweils dritte Abschnitt der Radialstreben 81a, 82a an der Reifenseitenfläche des Reifens 20 anliegt oder zumindest die Distanz zwischen der Reifenseitenfläche und den jeweils dritten Abschnitten der Radialstreben 81a, 82a kürzer als die Beabstandung B ist. Hierdurch wird die Fixierbarkeit der Anfahrhilfe 10 am Reifen 20 verbessert.

Fig. 5F zeigt eine Ausführungsform der Anfahrhilfe 10 mit gekrümmten Radialstreben 81b, 82b. Die gezeigten Radialstreben 81b, 82b haben eine Krümmung entlang ihrer Längenrichtung, wobei die Krümmung in Richtung der Stahlplatte 40 beziehungsweise des Reifens 20 gerichtet ist.

Durch die Krümmung der gezeigten Radialstreben 81b, 82b wird erreicht, dass die Distanz zwischen der Reifenseitenfläche und den Verbindungsgelenken kürzer als die Beabstandung B ist. Hierdurch wird die Fixierbarkeit der Anfahrhilfe 10 am Reifen 20 verbessert.

Die in Fig. 5F gezeigte Abstufung kann mit der in Fig. 5G gezeigten Krümmung kombiniert werden. Insbesondere können die unter Fig. 5F beschriebenen ersten Abschnitte der Radialstreben 81a, 82a eine Krümmung in Richtung der Stahlplatte 40 bzw. des Reifens 20 aufweisen.

Die in Fig. 5F und 5G gezeigte Sicherheitsabdeckung S schützt die mit der Stahlplatte 40 verbundenen Elemente der Anfahrhilfe 10 vor Umwelteinflüssen, zum Beispiel dem Eindringen von Schmutz. Weiter erhöht die Sicherheitsabdeckung S die Bedienersicherheit der Anfahrhilfe 10.

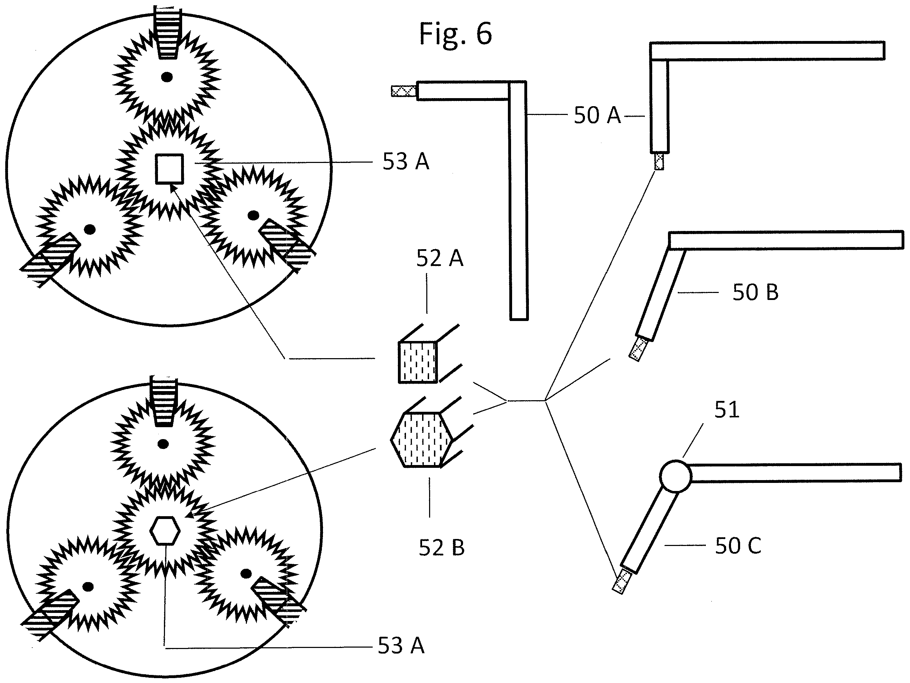

Fig. 6 zeigt schematisch Beispiele für einen Bedienerhebel 50A, 50B, 50C zur Rotation des Zentralelements durch einen Bediener. Ein Bedienerhebel 50A weist zwei rechtwinklig miteinander verbundene Hebelelemente auf. Ein weitere Bedienerhebel 50B weist zwei nicht rechtwinklig verbundene Hebelelemente auf. Auch ein über ein Hebelgelenk 51 variabel einstellbarer Bedienerhebel 50C, bestehend aus zwei Hebelelementen, ist möglich.

Gemeinsam ist allen gezeigten Hebelvarianten 50A, 50B, 50C ein mit dem Bedienerhebel verbundener polygonförmiger Werkzeugkopf 52A, 52B der sich für ein Zusammenwirken mit einer zugehörigen Aufnahme 53A, 53B eignet.

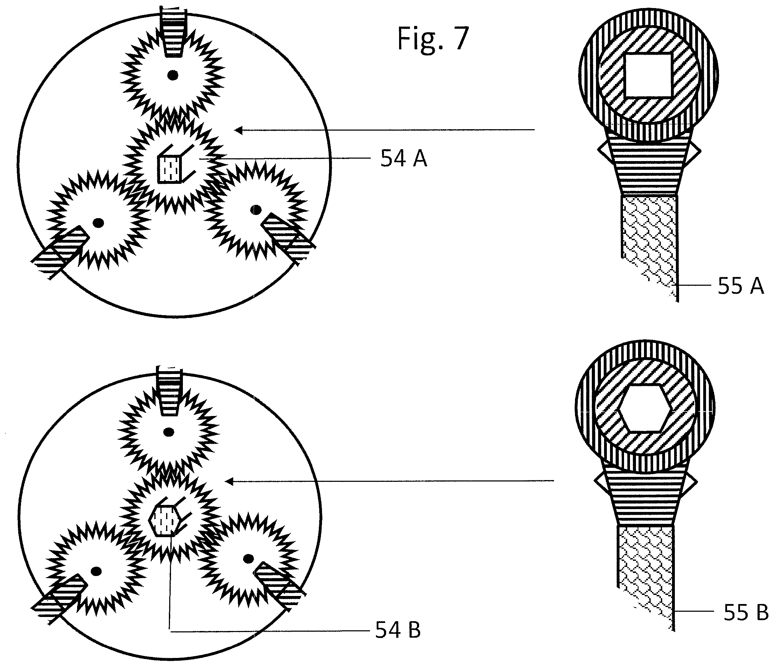

Fig. 7 zeigt schematisch Beispiele für eine Ratsche 55A, 55B zur Rotation des Zentralelements durch einen Bediener. In den dargestellten Ausführungsformen ist je ein polygonförmiger Werkzeugkopf 54A, 54B fest mit dem Zentralelement verbunden, sodass die Achse X0 jeweils durch das Zentrum des Werkzeugkopfes verläuft. Die dargestellten Ratschen 55A und 55B eigenen sich jeweils für ein Zusammenwirken mit den zugehörigen Werkzeugköpfen 54A und 54B.

Die hier beschriebenen Varianten der Vorrichtung sowie deren Funktions- und Betriebsaspekte dienen lediglich dem besseren Verständnis ihrer Struktur, Funktionsweise und Eigenschaften; sie schränken die Offenbarung nicht etwa auf die Ausführungsformen ein. Die Fig. sind schematisch, wobei wesentliche Eigenschaften und Effekte zum Teil deutlich vergrößert dargestellt sind, um die Funktionen, Wirkprinzipien, technischen Ausgestaltungen und Merkmale zu verdeutlichen. Der Schutzumfang der Erfindung wird durch die angehängten Ansprüche definiert.

## Patentansprüche

1. Eine Anfahrhilfe (10, 11) für den Reifen (20) eines Kraftfahrzeugs, umfassend:
einen Träger (40), ein Zentralelement (60A, 60B) und mindestens drei Bügel, wobei die Bügel jeweils ein Basiselement (71, 72, 73, 74), ein Radialelement (81, 82, 83, 84) und ein zu dem Radialelement (81, 82, 83, 84) abgewinkeltes Mantelelement (91, 92, 93, 94) umfassen, und wobei
das Zentralelement (60A, 60B) um eine erste Achse (X0) gegenüber dem Träger (40) rotierbar mit dem Träger (40) verbunden ist,
das Basiselement (71, 72, 73, 74) eines jeden Bügels jeweils mit dem Träger (40) verbunden ist,
jeder Bügel um eine jeweils weitere Achse (X1, X2, X3, X4) schwenkbar ist, wobei jede der jeweils weiteren Achsen (X1, X2, X3, X4) parallel zur ersten Achse (X0) angeordnet ist,
das Zentralelement (60A, 60B) mit den Bügeln derart im Wirkeingriff steht, dass eine Rotation des Zentralelements (60A, 60B) um die erste Achse (X0) eine Schwenkung der Bügel um jeweils eine der weiteren Achsen (X1, X2, X3, X4) bewirkt, sodass
sich ein Abstand der jeweiligen Mantelelemente (91, 92, 93, 94) zur ersten Achse (X0) ändert,
**dadurch gekennzeichnet, dass** das Basiselement eines jeden Bügels entweder
a) zumindest abschnittsweise ein Zahnrad (71A, 72A, 73A) ist, welches jeweils rotierbar mit dem Träger (40) verbunden ist, oder
b) ein Schwenklager (71B, 72B, 73B, 74B) ist, welches jeweils fest mit dem Träger (40) verbunden ist.

2. Eine Anfahrhilfe (10, 11) nach Anspruch 1, wobei
die weiteren Achsen (X1, X2, X3, X4) jeweils den gleichen Abstand zu der ersten Achse (X0) haben, und/oder
die weiteren Achsen (X1, X2, X3, X4) jeweils den gleichen Abstand zu den jeweils nächstliegenden weiteren Achsen (X1, X2, X3, X4) haben.

3. Eine Anfahrhilfe (10) nach Anspruch 1 oder 2, wobei
das Zentralelement zumindest abschnittsweise ein Zahnrad (60A), insbesondere ein Stirnrad oder ein Innenrad ist, und/oder
die Basiselemente der Bügel zumindest abschnittsweise Zahnräder (71A, 72A, 73A), insbesondere Stirnräder sind, die rotierbar mit dem Träger (40) verbunden sind und an denen jeweils eines der Radialelemente (81, 82, 83) absteht, und/oder
die weiteren Achsen (X1, X2, X3) sich jeweils im Zentrum der Basiselemente (71A, 72A, 73A) befinden.

4. Eine Anfahrhilfe (11) nach Anspruch 1 oder 2, wobei
die Basiselemente (71B, 72B, 73B, 74B) fest mit dem Träger (40) verbunden sind, und wobei
die Radialelemente (81, 82, 83, 84) der Bügel jeweils um eine der weiteren Achsen (X1, X2, X3, X4) schwenkbar mit einem Basiselement (71B, 72B, 73B, 74B) verbunden sind.

5. Eine Anfahrhilfe (10, 11) nach einem der vorangegangenen Ansprüche, weiter umfassend:
je ein Verbindungsgelenk (101, 102), welches je ein Mantelelement (91, 92) in einem Winkel von 80° bis 180° mit je einem Radialelement (81, 82) schwenkbar verbindet, wobei
der Winkel zwischen den Längenachsen des Mantelelements (91, 92) und des Radialelements (81, 82) definiert ist, und/oder
je eine Feder, welche ein Kraftmoment auf je ein Mantelelement (91, 92) gerichtet hin zum Radialelement (81, 82) desselben Bügels ausübt.

6. Eine Anfahrhilfe (10, 11) nach einem der vorangegangenen Ansprüche, wobei die Mantelelemente (91, 92, 93, 94):
- einen trapezförmigen, oder
- einen trapezförmigen mit elliptischer Aussparung versehenen (92A), oder
- einen halbringförmigen (92B), oder
- einen kreisrunden (92C), oder
- einen elliptischen
Querschnitt aufweisen, und/oder
die Mantelelemente (91, 92, 93, 94):
- einen einseitig gezahnten (92D), oder
- eine einseitig wellenförmigen (92E)
Längsschnitt aufweisen, und/oder
die Radialelemente
- eine Abstufung (81a, 82a), oder
- eine Krümmung (81b, 82b)
in Richtung des Trägers (40) aufweisen.

7. Eine Anfahrhilfe (10, 11) nach einem der vorangegangenen Ansprüche, wobei
das Zentralelement (60A, 60B) eine polygonförmige Aufnahme (53A, 53B), geeignet für ein Zusammenwirken mit einem korrespondierend gestalteten polygonförmigen Werkzeugkopf (52A, 52B) hat, oder
das Zentralelement (60A, 60B) einen polygonförmigen Werkzeugkopf (54A, 54B), geeignet für ein Zusammenwirken mit einem Werkzeug (55A, 55B) mit einer korrespondierend gestalteten polygonförmigen Aufnahme hat.

8. Eine Anfahrhilfe (10, 11) nach Anspruch 7, wobei
das Zentralelement (60A, 60B) dazu ausgebildet und angeordnet ist, durch
- ein Werkzeug (50A, 50B, 50C), insbesondere einen Hebel, mit einem polygonförmigen Werkzeugkopf (52A, 52B), oder
- ein Werkzeug, insbesondere einen Hebel, mit einer polygonförmigen Aufnahme, oder
- eine Ratsche mit einem polygonförmigen Werkzeugkopf, oder
- eine Ratsche mit einer polygonförmigen Aufnahme (55A, 55B),
rotiert zu werden.

9. Eine Anfahrhilfe nach einem der vorangegangenen Ansprüche, weiter umfassend:
mindestens eine Sperrvorrichtung, insbesondere eine Sperrklinke, welche mit dem Träger (40) verbunden ist, und wobei
die Sperrvorrichtung im geschlossenen Zustand die Rotation des Zentralelements (60A, 60B) und/oder der Basiselemente (71A, 72A, 73A) in jeweils eine Rotationsrichtung erlaubt und in die jeweils andere Rotationsrichtung unterbindet, und wobei
die Sperrvorrichtung im geöffneten Zustand die Rotation des Zentralelements (60) und/oder der Basiselemente (71A, 72A, 73A) in beide Rotationsrichtungen erlaubt.

10. Eine Anfahrhilfe nach einem der vorangegangenen Ansprüche, weiter Umfassend:
mindestens eine Kettenstruktur, insbesondere ein Kettengeflecht, wobei die Kettenstruktur Kettenglieder und/oder Befestigungselemente umfasst, und wobei
die Kettenstruktur mit den Mantelelementen (81, 82, 83, 84) und/oder den Radialelementen (91, 92, 93, 94) verbunden ist.

## Claims

1. Pull-away aid (10, 11) for the tyre (20) of a motor vehicle, comprising:
a support (40), a central element (60A, 60B) and at least three brackets, wherein
the brackets each comprise a base element (71, 72, 73, 74), a radial element (81, 82, 83, 84) and a sheath element (91, 92, 93, 94) at an angle to the radial element (81, 82, 83, 84), and wherein
the central element (60A, 60B) is connected to the support (40) so as to be rotatable about a first axis (X0) relative to the support (40),
the base element (71, 72, 73, 74) of each bracket is in each case connected to the support (40),
each bracket is pivotable about a respective further axis (X1, X2, X3, X4), wherein each of the respective further axes (X1, X2, X3, X4) is arranged in parallel to the first axis (A0),
the central element (60A, 60B) is in effective engagement with the brackets in such a manner that a rotation of the central element (60A, 60B) about the first axis (X0) causes a pivoting of the brackets about in each case one of the further axes (X1, X2, X3, X4), such that
a distance between the respective sheath elements (91, 92, 93, 94) and the first axis (X0) changes,
**characterised in that** the base element of each bracket is either
a) at least in sections a gearwheel (71A, 72A, 73A) which is in each case rotatably connected to the support (40), or
b) a pivot bearing (71B, 72B, 73B, 74B) which is in each case fixedly connected to the support (40).

2. Pull-away aid (10, 11) according to claim 1, wherein
the further axes (X1, X2, X3, X4) each have the same distance to the first axis (X0),
and/or
the further axes (X1, X2, X3, X4) each have the same distance to the respective closest further axes (X1, X2, X3, X4).

3. Pull-away aid (10) according to claim 1 or 2, wherein
the central element is at least in sections a gearwheel (60A), in particular a spur gear or an internal gear, and/or
the base elements of the brackets are at least in sections gearwheels (71A, 72A, 73A), in particular spur gears, which are rotatably connected to the support (40) and from each of which one of the radial elements (81, 82, 83) protrudes, and/or
the further axes (X1, X2, X3) are each located in the centre of the base elements (71A, 72A, 73A).

4. Pull-away aid (11) according to claim 1 or 2, wherein
the base elements (71B, 72B, 73B, 74B) are fixedly connected to the support (40), and
wherein
the radial elements (81, 82, 83, 84) of the brackets are each connected to a base element (71B, 72B, 73B, 74B) so as to be pivotable about one of the further axes (X1, X2, X3, X4).

5. Pull-away aid (10, 11) according to one of the preceding claims, further comprising:
in each case one connecting joint (101, 102), which pivotably connects one sheath element (91, 92) each at an angle of 80° to 180° to one radial element (81, 82) each, wherein
the angle between the longitudinal axes of the sheath element (91, 92) and the radial element (81, 82) is defined, and/or
in each case one spring which exerts a torque on one sheath element (91, 92) each, directed towards the radial element (81, 82) of the same bracket.

6. Pull-away aid (10, 11) according to one of the preceding claims, wherein the sheath elements (91, 92, 93, 94) have:
- a trapezoidal cross section, or
- a trapezoidal cross section provided with an elliptical recess (92A), or
- a half ring-shaped cross section (92B), or
- a circular cross section (92C), or
- an elliptical cross section,
and/or
the sheath elements (91, 92, 93, 94) have:
- a longitudinal section which is toothed on one side (92D), or
- a longitudinal section which is undulating on one side (92E),
and/or
the radial elements:
- are incremented (81a, 82a), or
- have a curvature (81b, 82b)
in the direction of the support (40).

7. Pull-away aid (10, 11) according to one of the preceding claims, wherein
the central element (60A, 60B) has a polygonal receptacle (53A, 53B), suitable for interacting with a correspondingly formed polygonal tool head (52A, 52B), or
the central element (60A, 60B) has a polygonal tool head (54A, 54B), suitable for interacting with a tool (55A, 55B) with a correspondingly formed polygonal receptacle.

8. Pull-away aid (10, 11) according to claim 7, wherein
the central element (60A, 60B) is designed and arranged to be rotated by
- a tool (50A, 50B, 50C), in particular a lever, with a polygonal tool head (52A, 52B), or
- a tool, in particular a lever, with a polygonal receptacle, or
- a ratchet with a polygonal tool head, or
- a ratchet with a polygonal receptacle (55A, 55B).

9. Pull-away aid according to one of the preceding claims, further comprising:
at least one locking device, in particular a pawl, which is connected to the support (40), and wherein
in the closed state, the locking device enables the rotation of the central element (60A, 60B) and/or of the base elements (71A, 72A, 73A) in each case in one direction of rotation and prevents rotation in the respective other direction, and wherein
in the open state, the locking device enables the rotation of the central element (60) and/or of the base elements (71A, 72A, 73A) in both directions of rotation.

10. Pull-away aid according to one of the preceding claims, further comprising:
at least one chain structure, in particular a chain mesh, wherein
the chain structure comprises chain links and/or fastening elements, and wherein
the chain structure is connected to the sheath elements (81, 82, 83, 84) and/or the radial elements (91, 92, 93, 94).

## Revendications

1. Une aide au démarrage (10, 11) pour le pneu (20) d'un véhicule automobile, comprenant :
un support (40), un élément central (60A, 60B) et au moins trois étriers, dans laquelle
les étriers comprennent chacun un élément de base (71, 72, 73, 74), un élément radial (81, 82, 83, 84) et un élément d'enveloppe (91, 92, 93, 94) incliné par rapport à l'élément radial (81, 82, 83, 84) et dans laquelle
l'élément central (60A, 60B) est relié avec le support (40) de manière rotative autour d'un premier axe (X0) par rapport au support (40),
l'élément de base (71, 72, 73, 74) de chaque étrier est relié avec le support (40),
chaque étrier peut pivoter respectivement autour d'autres axes (X1, X2, X3, X4), dans laquelle chacun des autres axes (X1, X2, X3, X4) est parallèle au premier axe (X0),
l'élément central (60A, 60B) est en prise fonctionnelle avec les étriers de façon à ce qu'une rotation de l'élément central (60A, 60B) autour du premier axe (X0) provoque un pivotement des étriers respectivement autour des autres axes (X1, X2, X3, X4), de façon à ce que
une distance entre l'élément d'enveloppe (91, 92, 93, 94) respectif et le premier axe (X0) varie,
**caractérisé en ce que** l'élément de base de chaque étrier est
a) à certains endroits, une roue dentée (71A, 72A, 73A), qui est reliée respectivement de manière rotative avec le support (40), ou
b) un palier pivotant (71B, 72B, 73B, 74B) qui est relié respectivement de manière fixe avec le support (40).

2. Une aide au démarrage (10, 11) selon la revendication 1, dans laquelle
les autres axes (X1, X2, X3, X4) présentent chacun la même distance par rapport au premier axe (X0) et/ou
les autres axes (X1, X2, X3, X4) présentent chacun la même distance par rapport aux autres axes (X1, X2, X3, X4) les plus proches.

3. Une aide au démarrage (10) selon la revendication 1 ou 2, dans laquelle
l'élément central est, au moins à certains endroits, une roue dentée (60A), plus particulièrement un pignon droit ou une roue intérieure et/ou
les éléments de base des étriers sont, au moins à certains endroits, des roues dentées (71A, 72A, 73A), plus particulièrement des pignons droits, qui sont reliés de manière rotative avec le support (40) et desquels part respectivement un des éléments radiaux (81, 82, 83) et/ou
les autres axes (X1, X2, X3) se trouvent respectivement au centre des éléments de base (71A, 72A, 72A).

4. Une aide au démarrage (11) selon la revendication 1 ou 2, dans laquelle
les éléments de base (71B, 72B, 73B, 74B) sont reliés de manière fixe avec le support (40) et dans laquelle
les éléments radiaux (81, 82, 83, 84) des étriers sont reliés chacun avec un élément base (71B, 72B, 73B, 74B) de manière pivotante autour d'un des autres axes (X1, X2, X3, X4).

5. Une aide au démarrage (10, 11) selon l'une des revendications précédentes, comprenant en outre :
une articulation (101, 102) qui relie, de manière pivotante, respectivement un élément d'enveloppe (91, 92), avec un angle de 80° à 180°, avec un élément radial (81, 82) respectif, dans laquelle
l'angle est défini entre les axes longitudinaux de l'élément d'enveloppe (91, 92) et de l'élément radial (81, 82) et/ou
un ressort, qui exerce un couple sur un élément d'enveloppe (91, 92), orienté en direction de l'élément radial (81, 82) de cet étrier.

6. Une aide au démarrage (10, 11) selon l'une des revendications précédentes, dans laquelle les éléments d'enveloppe (91, 92, 93, 94) présentent une section transversale :
- trapézoïdale ou
- trapézoïdale avec munie d'un évidement elliptique (92A) ou
- semi-annulaire (92B) ou
- circulaire (92C) ou
- elliptique
et/ou les éléments d'enveloppe (91, 92, 93, 94) présentent une section longitudinale :
- dentée sur un côté (92D) ou
- ondulée sur un côté (92E)
et/ou les éléments radiaux présentent, en direction du support (40),
- un épaulement (81a, 82a) ou
- une courbure (81b, 82b).

7. Une aide au démarrage (10, 11) selon l'une des revendications précédentes, dans laquelle
l'élément central (60A, 60B) comprend un logement polygonal (53A, 53B), adapté à une interaction avec une tête d'outil (52A, 52B) de forme polygonale correspondante ou
l'élément central (60A, 60B) comprend une tête d'outil (54A, 54B) polygonale adaptée à une interaction avec un outil (55A, 55B) avec un logement de forme polygonale correspondante.

8. Une aide au démarrage (10, 11) selon la revendication 7, dans laquelle l'élément central (60A, 60B) est conçu et disposé pour être mis en rotation
- par un outil (50A, 50B, 50C), plus particulièrement un levier avec une tête d'outil (52A, 52B) polygonale ou
- par un outil, plus particulièrement un levier, avec un logement polygonal ou
- par un cliquet avec une tête d'outil polygonale ou
- par un cliquet avec un logement polygonal (55A, 55B).

9. Une aide au démarrage selon l'une des revendications précédentes, comprenant en outre :
au moins un dispositif de blocage, plus particulièrement un cliquet de blocage qui est relié avec le support (40) et dans laquelle
le dispositif de blocage permet, dans l'état fermé, la rotation de l'élément central (60A, 60B) et/ou des éléments de base (71A, 72A, 73A) chacun dans un sens de rotation et interdit la rotation dans l'autre sens de rotation et dans laquelle
le dispositif de blocage permet, dans l'état ouvert, la rotation de l'élément central (60) et/ou des éléments de base (71A, 72A, 73A) dans les deux sens de rotation.

10. Une aide au démarrage selon l'une des revendications précédentes, comprenant en outre :
au moins une structure à chaînes, plus particulièrement un maillage de chaînes, dans laquelle la structure à chaînes comprend des maillons de chaînes et/ou des éléments de fixation et dans laquelle
la structure à chaînes est reliée avec les éléments d'enveloppe (81, 82, 83, 84) et/ou les éléments radiaux (91, 92, 93, 94).
